(19) **Europäisches Patentamt**

**European Patent Office**

**Office européen des brevets**

(11) **EP 0 803 681 B1**

(12) **FASCICULE DE BREVET EUROPEEN**

(45) Date de publication et mention
de la délivrance du brevet:
**09.07.2003 Bulletin 2003/28**

(51) Int Cl.⁷: **F23R 3/12**, F23R 3/04

(21) Numéro de dépôt: **97400928.4**

(22) Date de dépôt: **24.04.1997**

(54) **Optimisation du mélange des gaz brûlés dans une chambre de combustion annulaire**

Optimierung der Durchmischung von Verbrennungsgasen in einer Gasturbinenbrennkammer

Optimisation of the mixture of combustion gas in a gas turbine combustor

(84) Etats contractants désignés:
**DE FR GB**

(30) Priorité: **24.04.1996 FR 9605138**

(43) Date de publication de la demande:
**29.10.1997 Bulletin 1997/44**

(73) Titulaire: **Snecma Moteurs**
**75015 Paris (FR)**

(72) Inventeurs:
• **Ansart, Denis Roger Henri**
**77590 - Bois le Roi (FR)**

• **Ciccia, Patrick Samuel André**
**75020 - Paris (FR)**

(74) Mandataire: **Berrou, Paul**
**Snecma Moteurs**
**Propriété Intellectuelle**
**B.P. 81**
**91003 Evry Cédex (FR)**

(56) Documents cités:
**EP-A- 0 676 590**      **GB-A- 623 977**
**GB-A- 1 112 357**      **GB-A- 1 462 903**
**GB-A- 2 020 371**      **US-A- 2 517 015**
**US-A- 2 807 139**

## Description

La présente invention concerne une chambre de combustion annulaire d'une turbomachine, ladite chambre de combustion étant délimitée par une virole externe et une virole interne réunies à l'une de leurs extrémités par un fond de chambre et présentant en amont, une zone de combustion alimentée en carburant par une pluralité d'injecteurs répartis régulièrement dans le fond de chambre et associés à une pluralité de vrilles d'injection d'air faisant tourbillonner les gaz de combustion autour des axes géométriques des injecteurs, et en aval, une zone de dilution dans laquelle de l'air de dilution est introduit par au moins une rangée d'orifices ménagés dans la virole externe et par au moins une rangée d'orifices ménagés dans la virole interne, lesdits orifices étant disposés en correspondance avec les injecteurs de carburant.

Les parois des chambres de combustion des turbomachines aéronautiques comportent de nombreux orifices d'admission d'air afin de permettre la combustion du carburant injecté dans la chambre.

Parmi ces nombreux orifices, nous distinguons :

- les orifices d'admission du carburant primaire qui joue le rôle essentiel dans le déroulement de la combustion proprement dite,
- les orifices de dilution qui ont pour mission principale d'introduire de l'air frais dans les gaz brûlés issus de la combustion vive, afin de les diluer et d'abaisser leur température pour rendre cette température compatible avec la tenue thermique de la turbine située en aval de la chambre de combustion.

La combustion de carburation se fait dans la zone de combustion de la chambre. Le comburant primaire est essentiellement fourni par les vrilles d'injection d'air et par divers orifices ménagés dans le fond de chambre.

Les orifices de dilution sont disposés en rangées dans des plans transversaux de la chambre de combustion et sont disposés en général en vis-à-vis dans la virole externe et dans la virole interne. La première rangée d'orifices, dits "orifices primaires" est disposée entre la zone de combustion et la zone de dilution. Une partie de l'air introduit par les orifices de la première rangée recircule vers le fond de chambre et participe à la combustion; l'autre partie pénètre dans la zone de dilution et permet de diluer les gaz brûlés issus de la combustion vive.

Cette première rangée d'orifices est suivie en aval d'une ou plusieurs rangées d'orifices dits "orifices de dilution" introduisant de l'air dans la zone de dilution de la chambre.

La disposition en vis-à-vis des orifices primaires ou de dilution sur la virole externe et la virole interne génère un blocage vis-à-vis des gaz brûlés venant du fond de la chambre. Ceci est préjudiciable à l'homogénéisation de la température des gaz brûlés délivrés à la turbine.

GB 623 977 A et EP 0 676 590 A montre un exemple de chambre de combustion annulaire du type précité dans laquelle les orifices d'une rangée de la virole externe et de la rangée correspondante de la virole interne sont décalés angulairement dans le plan transversal les traversant, par rapport aux plans axiaux passant par l'axe des injecteurs, dans le même sens, ou dans le sens opposé de la composante circonférentielle de l'écoulement local des gaz brûlés afin de modérer, maintenir ou amplifier le tourbillonnement des gaz brûlés provenant de la zone de combustion.

Dans le but d'améliorer l'homogénéisation des gaz brûlés, l'invention prévoit que les orifices placés en vis-à-vis sont décalés axialement suivant l'axe des injecteurs d'une valeur située entre la moitié du diamètre d'un gros orifice et la moitié du diamètre d'un petit orifice.

Dans le cas où le nombre d'orifices d'une rangée est le double du nombre d'injecteurs de carburant, ces orifices sont répartis en deux séries d'orifices alternés de diamètres différents, les orifices de diamètre élevé délivrant un air de dilution équicourant avec le sens de rotation des vrilles et les orifices de diamètre réduit délivrant un air à contre-courant.

D'autres avantages et caractéristiques de l'invention ressortiront à la lecture de la description suivante faite à titre d'exemple et en référence aux dessins annexés dans lesquels

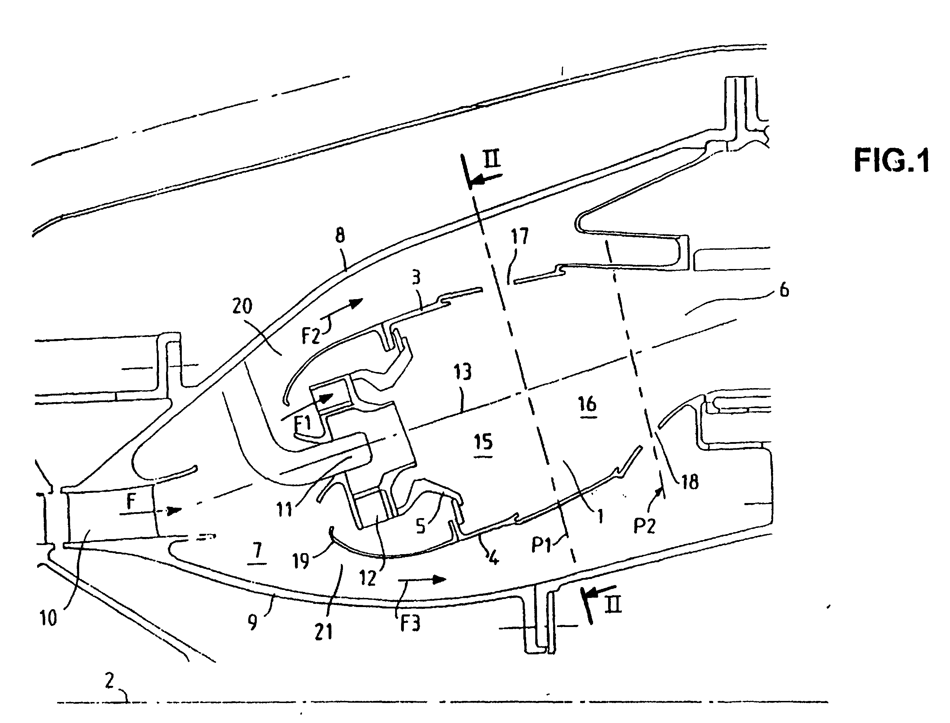

- la figure 1 est une demi-coupe selon un plan axial passant par l'axe d'un injecteur d'une chambre de combustion annulaire selon la présente invention;
- la figure 2 est une coupe transversale selon la ligne II-II de la figure 1 de la même chambre de combustion qui montre la disposition des orifices sur la virole externe et la virole interne;
- la figure 3 est une coupe transversale selon la ligne II-II de la figure 1 d'une variante de réalisation de l'invention;
- les figures 4a et 4b sont des coupes suivant la ligne IV-IV de la figure 3 d'une variante de réalisation de l'invention.

Le dessin montre une chambre de combustion 1 annulaire d'une turbine à gaz d'axe 2. Cette chambre de combustion 1 est délimitée par une virole externe 3 et une virole interne 4, ces viroles 3 et 4 étant reliées à l'une de leurs extrémités par un fond de chambre 5 et formant un passage annulaire 6 à leurs autres extrémités pour l'évacuation des gaz brûlés vers une turbine non représentée. La chambre de combustion 1 est située dans un carter 7 délimité par une paroi externe 8 et une paroi interne 9. Un diffuseur 10 délivre de l'air, comprimé par un compresseur non représenté, dans le carter 7.

Le fond de chambre 5 est équipé d'un dispositif d'injection qui comporte une pluralité d'injecteurs de carburant 11 associés chacun à au moins une vrille d'injection d'air 12. Les injecteurs de carburant 11 sont répartis régulièrement dans le fond de chambre 5, et les vrilles 12 impriment aux gaz de combustion issus de chaque injecteur un mouvement tourbillonnaire autour de l'axe géométrique 13 de cet injecteur 12, dans le sens représenté par la flèche 14, tous les tourbillons de gaz tournant dans le même sens.

La chambre de combustion présente d'amont en aval une zone primaire ou zone de combustion 15 dans laquelle le carburant est brûlé, et une zone de dilution 16 dans laquelle on introduit de l'air de dilution par des orifices 17, 18 ménagés respectivement dans la virole externe 3 et la virole interne 4.

Des orifices supplémentaires permettent d'introduire de l'air frais, devant participer à la combustion, dans la zone primaire 15, ou de former un film de protection entre les flux chauds de gaz et les viroles 3 et 4.

Le flux d'air F issu du diffuseur 10 est partagé en plusieurs flux par le dôme 19 qui coiffe le fond de chambre 5. Un premier flux d'air F1 pénètre dans le dôme 19 et est destiné à participer activement à la pulvérisation et à la combustion du carburant délivré dans la chambre de combustion 1; un deuxième flux F2 circule dans l'espace annulaire 20 délimité par la virole externe 3 et la paroi externe 8, et un troisième flux d'air F3 circule dans l'espace annulaire 21 délimité par la virole interne 4 et la paroi interne 9.

Les flux F2 et F3 participent au refroidissement des viroles 3 et 4, et à la formation du film de protection. La plus grande partie de ces flux F2 et F3 toutefois pénètre dans la zone de dilution par les orifices 17 et 18.

Les orifices 17 et 18 sont répartis en rangées d'orifices dans des plans transversaux P1, P2 sensiblement perpendiculaires aux axes géométriques 13 des injecteurs de carburant 11.

Le plan transversal P1 est situé à la frontière entre la zone de combustion 15 et la zone de dilution 16. Une partie de l'air pénétrant par les orifices 17 et 18 situés dans le plan P1 recircule vers le fond de chambre 5 et participe activement à la combustion du carburant dans la zone de combustion 15. L'autre partie de l'air pénétrant par ces mêmes orifices 17 et 18 vient se mélanger aux gaz brûlés dans la zone de dilution 16.

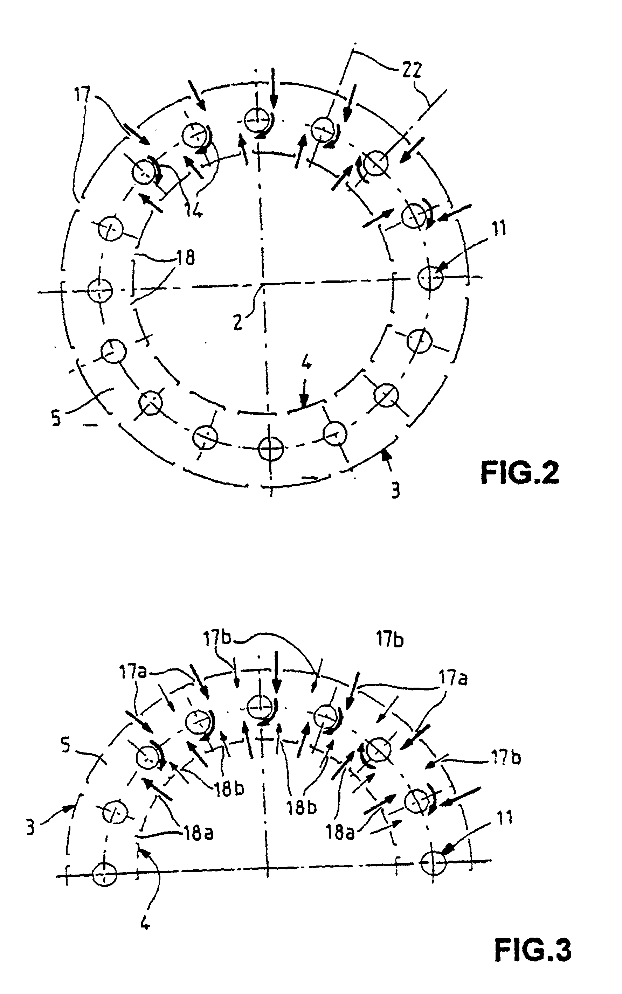

Comme on le voit sur la figure 2, les orifices 17 de la virole externe 3, situés dans le plan P1 sont décalés par rapport aux plans axiaux 22 passant par l'axe 2 de la turbomachine et les axes géométriques 13 des injecteurs 11 dans le sens 14 des tourbillons, c'est-à-dire dans le sens des aiguilles d'une montre, tandis que les orifices 18 de la virole interne 4 sont décalés dans le sens inverse des aiguilles d'une montre, c'est-à-dire également dans le sens des tourbillons. L'air injecté par les orifices 17 et 18 est équicourant avec le sens de rotation 14 des vrilles 12.

On peut envisager également que les orifices 17 de la virole externe 3 soient décalés dans le sens inverse des aiguilles d'une montre, tandis que les orifices 18 soient décalés dans le sens des aiguilles d'une montre. L'air injecté par les orifices 17 et 18 est à contre-courant avec le sens de rotation 14 des vrilles 12.

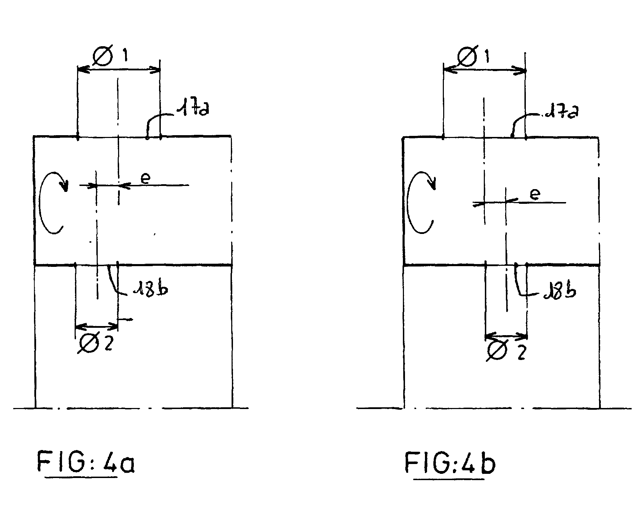

Comme on le voit aux figures 4a et 4b en variante à la figure 3, les orifices 17b, 18a et 17a, 18b placés en vis-à-vis sont décalés axialement suivant l'axe 13, afin d'organiser l'écoulement des jets d'air dans les gaz brûlés. Un décalage vers l'amont des orifices 17b, 18a aura pour effet de favoriser la pénétration des jets vers les vrilles 12 et inversement.

La valeur e du décalage est située entre la moitié du diamètre du gros orifice et la moitiée du diamètre du petit orifice

$$\frac{\varnothing 2}{2} < e < \frac{\varnothing 1}{2}$$

Dans le mode de réalisation représenté sur la figure 2, le nombre d'orifices 17 d'une rangée externe et le nombre d'orifices 18 d'une rangée interne est égal au nombre d'injecteurs de carburant 11, et les tourbillons tournent tous dans le même sens, c'est-à-dire dans le sens des aiguilles d'une montre, si on regarde le fond de chambre 5 depuis la sortie aval 6 de la chambre de combustion.

Dans le mode de réalisation représenté sur la figure 3, le nombre d'orifices de chaque rangée est le double du nombre d'injecteurs 11 et les orifices 17 de la virole externe 3 sont placés en vis-à-vis des orifices 18 de la virole interne 4. Mais, ainsi que l'on voit sur la figure 3, les orifices de chaque rangée sont répartis en deux séries d'orifices de diamètres différents et alternés. Les orifices de diamètre élevé, 17a sur la virole externe 3 et 18a sur la virole interne 4, délivrent un débit d'air équicourant avec le sens de rotation 14 des vrilles 12, tandis que les orifices de diamètre réduit, 17b sur la virole externe 3 et 18b sur la virole interne 4, délivrent un débit d'air plus faible à contre-courant. Les orifices de diamètre élevé 17a sont disposés en regard des orifices de diamètre réduit 18b, tandis que les orifices de diamètre réduit 17b sont situés en vis-à-vis des orifices de diamètre élevé 18a.

La disposition des orifices 17, 18 décrite ci-dessus, permet de maintenir ou de favoriser le "swirl" provenant du système d'injection. Cette disposition est applicable tant aux orifices primaires situés dans le plan P1, qu'aux orifices de dilution situés dans le plan P2.

## Revendications

1. Chambre de combustion annulaire d'une turbomachine, ladite chambre de combustion (1) étant délimitée par une virole externe (3) et une virole interne (4) réunies à l'une de leurs extrémités par un fond de chambre (5), et présentant, en amont, une zone de combustion (15) alimentée en carburant par une pluralité d'injecteurs (11) répartis régulièrement dans le fond de chambre (5) et associés à une pluralité de vrilles (12) d'injection d'air faisant tourbillonner les gaz de combustion autour des axes géométriques (13) des injecteurs (11), et en aval, une zone de dilution (16) dans laquelle de l'air de dilution est introduit par au moins une rangée d'orifices (17) ménagés dans la virole externe (3) et par au moins une rangée d'orifices (18) ménagés dans la virole interne (4), lesdits orifices (17, 18) étant disposés en correspondance avec les injecteurs de carburant (11), dans laquelle les orifices (17) d'une rangée de la virole externe (3) et les orifices (18) de la rangée correspondante de la virole interne (4) sont décalés angulairement dans le plan transversal (P1, P2) les traversant, par rapport aux plans axiaux (22) passant par l'axe (13) des injecteurs (11), dans le même sens, ou dans le sens opposé de la composante circonférentielle de l'écoulement local des gaz brûlés, afin de modérer, maintenir ou amplifier le tourbillonnement des gaz brûlés provenant de la zone de combustion, lesdites orifices (17,18) sont répartis en deux séries d'orifices de diamètres differents et alternés, **caractérisée par le fait que** les orifices (17b, 18a) et (17a, 18b) placés en vis-à-vis sont décalés axialement suivant l'axe (13) d'une valeur située entre la moitié du diamètre du gros orifice (17a,18a) et la moitié du diamètre du petit orifice (17b,18b).

2. Chambre de combustion selon la revendication 1 dans laquelle le nombre d'orifices (17, 18) d'une rangée est le double du nombre d'injecteurs de carburant (11), **caractérisée par le fait que** les orifices (17a, 18a) de diamètre élevé délivrant un air de dilution équicourant ou contre-courant avec le sens de rotation (14) des vrilles (12) et les orifices (17b, 18b) de diamètre réduit délivrant un air à contrecourant ou équicourant.

## Patentansprüche

1. Ringbrennkammer für eine Turbomaschine, wobei diese Brennkammer (1) von einem äußeren Mantelring (3) und einem inneren Mantelring (4) begrenzt ist, die an einem ihrer Enden durch einen Kammerboden (5) miteinander verbunden sind,

mit einer Verbrennungszone (15) auf der stromaufwärtigen Seite, die durch eine Mehrzahl von Einspritzdüsen (11) mit Kraftstoff gespeist wird, die in dem Kammerboden (5) regelmäßig verteilt sind und denen eine Mehrzahl von Lufteinspritzverwirblern (12) zugeordnet sind, die die Verbrennungsgase um die geometrischen Achsen (13) der Einspritzdüsen verwirbeln, und

mit einer Verdünnungszone (16) auf der stromabwärtigen Seite, in die durch wenigstens eine Reihe von in dem äußeren Mantelring (3) angebrachte Öffnungen (17) und wenigstens eine Reihe von in dem inneren Mantelring (4) angebrachte Öffnungen (18) Verdünnungsluft eingeführt wird, wobei die Öffnungen (17, 18) in Entsprechung zu den Kraftstoffeinspritzdüsen (11) angeordnet sind,

wobei die Öffnungen (17) einer Reihe des äußeren Mantelrings (3) und die Öffnungen (18) der korrespondierenden Reihe des inneren Mantelrings (4) in der sie durchdringenden transversalen Ebene (P1, P2) relativ zu den durch die Achse (13) der Einspritzdüsen (11) verlaufenden axialen Ebenen (22) in der gleichen Richtung in der entgegengesetzten Richtung der Umfangskomponente der lokalen Strömung der Verbrennungsgase winkelversetzt sind, um die Verwirbelung der aus der Verbrennungszone kommenden Verbrennungsgase zu dämpfen, beizubehalten oder zu verstärken, wobei die genannten Öffnungen (17, 18) in zwei Reihen von Öffnungen mit unterschiedlichen und abwechselnden Durchmessern verteilt sind,

**dadurch gekennzeichnet,**

**daß** die einander gegenüber liegenden Öffnungen (17b, 18a und 17a, 18b) entlang der Achse (13) um einen Wert axial versetzt sind, der zwischen dem halben Durchmesser der großen Öffnung (17a, 18a) und dem halben Durchmesser der kleinen Öffnung (17b, 18b) liegt.

2. Brennkammer nach Anspruch 1, bei der die Zahl der Öffnungen (17, 18) einer Reihe doppelt so groß ist wie die Zahl der Kraftstoffeinspritzdüsen (11),

**dadurch gekennzeichnet,**

**daß** die Öffnungen (17a, 18a) mit großem Durchmesser eine mit der Rotationsrichtung (14) der Verwirbler (12) gleichlaufende oder gegenläufige Verdünnungsluft liefern und die Öffnungen (17b, 18b) mit kleinem Durchmesser eine gegenläufige oder gleichlaufende Luft liefern.

## Claims

1. Annular combustion chamber of a turbomachine, the said combustion chamber (1) being delimited by an outer shell ring (3) and an inner shell ring (4), connected at one of their ends by a chamber end wall (5), and having, upstream, a combustion area (15) supplied with fuel by a number of injectors (11) distributed uniformly in the chamber end wall (5) and associated with a number of swirl inducers (12) for the injection of air, causing the combustion gases to swirl around the geometric axes (13) of the injectors (11), and, downstream, a dilution area (16) in which dilution air is introduced through at least one row of orifices (17) formed in the outer shell (3) and through at least one row of orifices (18) formed in the inner shell ring (4), the said orifices (17, 18) being arranged to correspond with the fuel injectors (11), in which combustion chamber the orifices (17) of a row of the outer shell ring (3) and the orifices (18) of the corresponding row of the inner shell ring (4) are angularly offset in the transverse plane (P1, P2) passing through them, with respect to the axial planes (22) passing through the axis (13) of the injectors (11), in the same direction as, or in the opposite direction to, the circumferential component of the local flow of the burnt gases so as to moderate, sustain or amplify the swirling movement of the burnt gases coming from the combustion area, the said orifices (17, 18) are distributed in two series of orifices of different alternating diameters and **characterized in that** the orifices (17b, 18a) and (17a, 18b) placed facing each other are axially offset along the axis (13) by an amount that ranges between half the diameter of the large orifice (17a, 18a) and half the diameter of the small orifice (17b, 18b).

2. Combustion chamber according to Claim 1 in which the number of orifices (17, 18) in a row is twice the number of fuel injectors (11), **characterized in that** the high-diameter orifices (17a, 18a) deliver dilution air with the current or against the current in the direction of rotation (14) of the swirl inducers (12) and the small-diameter orifices (17b, 18b) deliver air against the current or with the current.

FIG.1

**FIG.2**

**FIG.3**

FIG: 4a

FIG: 4b